# EUROPÄISCHE PATENTANMELDUNG

(11) **EP 0 734 829 A2**
(43) Veröffentlichungstag der Anmeldung: **02.10.1996**
(21) Anmeldenummer: 96101399.2
(22) Anmeldetag: 01.02.1996
(51) Int. Cl.: B29C 44/44

(54) **Verfahren zur Herstellung von Formkörpern aus geschäumten Polyolefinen**

(30) Priorität: 31.03.1995 DE 19512059
(71) Anmelder: HÜLS AKTIENGESELLSCHAFT, D-45764 Marl (DE)
(72) Erfinder: Wirobski, Reinhard, D-45768 Marl (DE); Träger, Michael, Dr., D-45721 Haltern (DE)

(57) **Zusammenfassung**

Aus vorgeschäumten Polyolefinteilchen hoher Dichte sollen Formkörper möglichst niedriger Dichte hergestellt werden. Dies gelingt mit Hilfe eines Verfahrens, bei dem man Polyolefinteilchen einsetzt, die auf 30 bis 95 % ihres ursprünglichen Volumens geschrumpft sind und die anschließend eine ausreichende Zeit bei einer mindestens 20 °C unterhalb der Erweichungstemperatur liegenden Temperatur mit einem inerten Gas unter einem Überdruck von 0,2 bis 10 bar behandelt werden, wobei die so behandelten Teilchen unter weitgehender Beibehaltung des Innendrucks in eine Form gefüllt und verschäumt werden.

Einsatzgebiete der so hergestellten Formteile sehr niedriger Dichte sind unter anderem der Verpackungsbereich sowie Soft-Polster im Kfz-Innenraum.

## Beschreibung

Gegenstand der vorliegenden Erfindung ist ein Verfahren zur Herstellung sehr leichter Formteile aus Polyolefin-Schaumpartikeln hoher Dichte.

Verfahren zur Herstellung von Polyolefin-Schaumpartikeln sind bekannt. Beispielsweise wird in der DE-A-21 55 775 eine Dispersion aus Polymerteilchen in einem flüssigen Dispersionsmittel unter Druck wärmebehandelt. Während dieser Wärmebehandlung wird ein Teil des Dispersionsmittels unter Rühren im Polymeren gelöst. Nach einer Behandlungszeit von ca. 30 min wird der Reaktorinhalt in einen Niederdruckraum bei Umgebungstemperatur entleert. Dabei kommt es zur Expansion der Polymerteilchen zu Schaumperlen. Durch Zusatz von organischen oder anorganischen Füllstoffen zum Polymeren sollen besonders gleichmäßige Schaumqualitäten erreicht werden.

Die Verschäumung speziell von Ethylen/Propylen-Randomcopolymeren wird in der EP-A-0 053 333 beschrieben. Dort wird mit einem System gearbeitet, das aus Polymerpartikeln, Wasser als Dispersionsmittel, einem festen Dispergierhilfsmittel sowie einem flüchtigen Treibmittel besteht.

Durch Dispersions- oder Extrusionsschäumung hergestellte Partikel können auch in geschrumpfter Form erhalten werden. Beispielsweise wird in DE-A-25 24 196 beschrieben, wie das Schüttgewicht von leichten Schaumpartikeln durch Schrumpfen vergrößert werden kann. Dies wird durch ein nachträgliches Erhitzen und Zusammenpressen erreicht. Ziel ist es hierbei, geschäumte Formteile mit hoher Dichte herzustellen.

Die EP-A-0 453 836 beschreibt Schaumpartikel, die nach der Expansion auf bis zu 40 % ihres ursprünglichen Volumens schrumpfen. Diese werden unter Druck und Temperatur nachbehandelt, um die Schrumpfung aufzuheben, so daß Schaumperlen mit einem Schüttgewicht von 10 g/l erhalten werden. Die EP-A-0 453 836 lehrt somit, daß bei der Herstellung leichter Formteile geschrumpfte Schaumperlen nicht direkt eingesetzt werden können.

In der ähnlich lautenden DE-A-39 22 207 wird ebenfalls ein unerwünschtes Schrumpfen nach der Expansion beschrieben. Durch Nachbehandlung unter Druck und bei höherer Temperatur erhalten die Schaumperlen ihr ursprüngliches Volumen zurück.

Schließlich werden in JP-A-04/015 236 definierte Bedingungen beschrieben, die beim Expansionsprozess eingehalten werden müssen, um zu geschrumpften Schaumpartikeln zu gelangen. Als Beispiel werden geschrumpfte Schaumpartikel der Schüttdichte 25 g/l erhalten; beim Verarbeiten zu Formteilen wird eine Dichte von 23,1 g/l erzielt. Ohne Beeinflussung des Schäumprozesses wird eine Schüttdichte von 16,3 g/l erhalten. Daraus lassen sich Formteile mit einer Dichte von 24,4 g/l herstellen. Der Vorteil bei diesem Verfahren sind geringere Transportkosten gegenüber dem leichteren Material.

Somit war also einerseits bekannt, daß geschrumpfte Schaumpartikel direkt zur Herstellung von Formteilen verwendet werden können. Die Qualität dieser Formteile wird jedoch andererseits als unbefriedigend beschrieben; zudem ist die Dichte der Formteile auf Werte beschränkt, die im Bereich der Schüttdichte der geschrumpften Schaumpartikel liegen.

Im Stand der Technik (EP-A-0 453 836; DE-A-39 22 207) werden diese Nachteile dadurch behoben, daß durch eine weitere Expansion der geschrumpften Partikel zunächst die Schrumpfung aufgehoben wird. Die so erhaltenen Partikel werden dann zur Formteilherstellung eingesetzt. Dieses Verfahren kann jedoch nicht befriedigen, da der zusätzliche Expansionsschritt aufwendig und damit teuer ist. Zudem sind die so erzielbaren Formteildichten für viele Zwecke immer noch zu hoch.

Die der Erfindung zugrundeliegende Aufgabe bestand nun darin, aus vorgeschäumten Polyolefinteilchen hoher Dichte Formkörper möglichst niedriger Dichte herzustellen. Ein weiterer Aspekt der Aufgabe bestand darin, ausgehend von Schaumpartikeln hoher Dichte Formkörper herzustellen, deren Dichte durch Variation einfacher Verfahrensparameter leicht eingestellt werden kann.

Diese Aufgabe wird durch ein Verfahren gelöst, bei dem man Polyolefinteilchen einsetzt, die auf 30 bis 95 % ihres ursprünglichen Volumens geschrumpft sind und die anschließend eine ausreichende Zeit bei einer mindestens 20 °C unterhalb der Erweichungstemperatur liegenden Temperatur mit einem inerten Gas unter einem Überdruck von 0,2 bis 10 bar behandelt werden, wobei die so behandelten Teilchen unter weitgehender Beibehaltung des Innendrucks in eine Form gefüllt und verschäumt werden.

Es wird hierbei bevorzugt, daß die geschrumpften Partikel im wesentlichen frei von flüchtigem organischen Treibmittel sind.

Im folgenden soll die Erfindung näher erläutert werden.

Als Polyolefine sind beispielsweise Propylenpolymere wie Propylen-Ethylen- oder Propylen-Buten-1-Randomcopolymere, Random-Terpolymere von Ethylen, Propylen und Buten-1, Ethylen-Propylen-Blockcopolymere und Homopolypropylen, Ethylenpolymere wie Polyethylen niedriger, mittlerer oder hoher Dichte, lineares Polyethylen niedriger Dichte, Ethylen-Vinylacetat-Copolymere, Ethylen-Methylmethacrylat-Copolymere, Ionomere oder andere Polyolefine wie Polybuten-1 geeignet. Bevorzugt wird ein Ethylen-Propylen-Randomcopolymeres mit 1 bis 15 Gew.-% Ethylen eingesetzt. Besonders bevorzugt ist ein Ethylengehalt von 1 bis 10 Gew.-% und ganz besonders bevorzugt von 2 bis 5 Gew.-%.

Das Polyolefin kann im Rahmen der Erfindung entweder nach dem Extrusionsverfahren oder bevorzugt nach dem Dispersionsverfahren vorgeschäumt werden. Beide Verfahren sind dem Fachmann wohlbekannt.

Beim Dispersionsverfahren liegt das Polyolefin in Form von diskreten Partikeln vor. Diese haben einen mittleren Teilchendurchmesser von vorzugsweise 0,5 bis 5 mm. Um eine gleichmäßige Schäumung zu erzielen, können sie gegebenenfalls, dem Stand der Technik entsprechend, einen Füllstoff enthalten, der als Keimbildner wirkt.

Als Dispersionsmittel wird vorzugsweise Wasser verwendet. Geeignet sind jedoch beispielsweise auch Alkohole wie Methanol oder Ethanol.

Um ein Agglomerieren zu verhindern, kann der Mischung von Polymerteilchen und Dispersionsmittel ein feinteiliges Dispergierhilfsmittel und/oder eine oberflächenaktive Verbindung zugesetzt werden. Beispiele hierfür sind Calciumphosphat, basisches Magnesiumcarbonat, basisches Zinkcarbonat, Calciumcarbonat, Aluminiumoxid, Bariumsulfat, Talkum, Alkylbenzolsulfonate, Paraffinsulfonate oder Ethoxylate.

Zur Einstellung der Dichte der Schaumperlen ist es zweckmäßig, zusätzlich ein flüchtiges Treibmittel zuzugeben. Geeignete Treibmittel sind aus dem Stand der Technik bekannt; beispielsweise können gesättigte aliphatische Kohlenwasserstoffe wie Ethan, Propan, n-Butan, i-Butan, Pentan oder Hexan, alicyclische Kohlenwasserstoffe wie Cyclopentan oder Cyclohexan, halogenierte Kohlenwasserstoffe wie Trichlormonofluormethan, Dichlordifluormethan, Dichlortetrafluorethan, Trichlortrifluorethan, Dichlormonofluormethan, Methylchlorid, Methylenchlorid oder Ethylchlorid sowie anorganische Gase wie beispielsweise Kohlendioxid oder Stickstoff, jeweils einzeln oder als Mischung, verwendet werden.

Der Schrumpfungsgrad der erhaltenen vorgeschäumten Partikel kann bestimmt werden, indem diese 2 Stunden lang bei 80 °C unter einem Luftdruck von 10 bar druckbeladen werden. Anschließend werden sie entnommen und auf Raumtemperatur und Atmosphärendruck gebracht, wodurch die Schrumpfung aufgehoben wird. Durch Vergleich der Schüttdichten läßt sich leicht errechnen, wieviel Prozent ihres ursprünglichen Volumens die geschrumpften Teilchen einnehmen.

Die Verfahrensparameter, die zu einer Schrumpfung der zunächst erhaltenen vorgeschäumten Partikel führen, sind im Prinzip bekannt. Beispielsweise kann die Schrumpfung nachträglich bewirkt werden, wie es in DE-A-25 24 196 beschrieben ist. Bevorzugt wird jedoch die Verschäumung so durchgeführt, daß geschrumpfte Partikel unmittelbar erhalten werden. Verfahrensmaßnahmen, die dies bewirken, sind beispielsweise;
- Expansion der Dispersion in einen geheizten Niederdruckraum wie in JP-A-04/015 236;
- Verwendung eines schnell diffundierenden C₃- bis C₅-Kohlenwasserstoffs als Treibmittel wie in DE-A-39 22 207 oder EP-A-0 453 836;
- Einsatz größerer Mengen an Treibmittel bei der Imprägnierung oder
- Anhebung der Temperatur bei der Imprägnierung bzw. Schäumung.

Selbstverständlich können derartige Maßnahmen auch kombiniert werden.

Zur abschließenden Druckbeladung werden die geschrumpften Teilchen im allgemeinen zwischen Raumtemperatur (20 °C) und einer mindestens 20 °C, vorzugsweise mindestens 30 °C unterhalb der Erweichungstemperatur des Polymeren liegenden Temperatur mit einem inerten Gas unter einem Überdruck von 0,2 bis 10 bar, vorzugsweise 0,5 bis 6 bar, eine ausreichende Zeit, im allgemeinen 5 Minuten bis 20 Stunden lang behandelt. Der optimale Zeitraum je nach Druck und Temperatur läßt sich leicht durch Vorversuche ermitteln.

Als inertes Gas können hierbei beispielsweise Luft, Stickstoff oder CO₂ verwendet werden.

Nach Durchführung der Druckbeladung verfügen die geschrumpften Schaumpartikel über einen Innendruck, der höher als der Atmosphärendruck ist.

Die druckbeladenen geschrumpften Partikel werden anschließend unter weitgehender Beibehaltung des Innendrucks in eine Form gefüllt. Hierbei kann die Produktentnahme aus dem Druckbehälter sowohl kontinuierlich als auch batchweise erfolgen. Es sollte sichergestellt werden, daß die jeweils ausgeschleuste Produktmenge innerhalb von 30 Minuten, vorzugsweise innerhalb von 15 Minuten, zu Formteilen verarbeitet wird.

In einer bevorzugten Ausführungsform wird das Produkt durch eine Rohrstrecke aus dem Druckbehälter direkt in die Form befördert, wobei eine Druckdifferenz als treibende Kraft wirkt. Der Druck in der Form liegt hierbei niedriger als der im Druckbehälter und kann auch im Bereich des Atmosphärendrucks liegen. Somit findet in der Rohrstrecke ein Druckabfall statt, weshalb die geförderten Partikel etwas aufblähen; der Innendruck sinkt hierbei um einen gewissen Betrag. Dies soll ausdrücklich vom Merkmal "unter weitgehender Beibehaltung des Innendrucks" mit umfaßt werden.

Mit Hilfe des erfindungsgemäßen Verfahrens lassen sich auf einfache Weise sehr leichte Formteile herstellen. Dichten von unter 20 g/l, beispielsweise im Bereich um 10 g/l, lassen sich auf diese Weise problemlos realisieren. Sofern gewünscht, können jedoch auch höhere Formteildichten, beispielsweise im Bereich um 50 g/l oder höher, hergestellt werden. Hierzu setzt man weniger stark vorgeschäumte Partikel ein; zusätzlich kann man durch das Ausmaß der Druckbehandlung das Formteilgewicht steuern. Eine geringere Druckbehandlung führt zu einem höheren Formteilgewicht und umgekehrt.

Die erfindungsgemäß hergestellten Formteile sind von guter Qualität. Sie zeichnen sich durch einen hohen Verschweißungsgrad aus. Beim Bruch erfolgt die Rißbildung zu mindestens 90 % durch die Schaumpartikel. Die Oberfläche der Formteile ist glatt und nahezu frei von Zwickeln. Entsprechend dem Werkzeug ist die Ausbildung dünner Stege und Kanten gut. Der Schrumpf der Formteile ist raumgewichtsabhängig und gut reproduzierbar; tyischerweise beträgt er 1,5 % bei 45 g/l und 4,2 % bei 15 g/l. Hierzu wird eine definierte Meßstrecke im Werkzeug mit dem tatsächlich erhaltenen Formteilmaß nach Konditionierung verglichen. Das Mindermaß wird als Schrumpf in % ausgedrückt. Vorteilhafte Einsatzgebiete sind unter anderem der Verpackungsbereich sowie Soft-Polster im Kfz-Innenraum.

Im folgenden soll die Erfindung beispielhaft erläutert werden.

### Beispiel 1:

In einem 60 l-Reaktor wird eine Suspension, bestehend aus
- 100,0: Teilen Wasser,
- 13,7: Teilen Ethylen-Propylen-Randomcopolymer,
- 5,62: Teilen n-Butan (41,0 Teile bezogen auf 100 Teile Copolymer),
- 0,1: Teilen Tricalciumphosphat und
- 0,05: Teilen MARLON® A 360
aufgeheizt und 30 Minuten bei 140 °C gerührt. Nach Ablauf dieser Haltezeit wird der Reaktordruck durch Aufpressen von Stickstoff auf 20 bar erhöht; anschließend wird der Reaktorinhalt innerhalb von 20 Sekunden in einen unter Atmosphärendruck stehenden Behälter ausgetragen.

Es werden stark geschrumpfte Schaumpartikel mit einer Schüttdichte von 27 g/l erhalten.

### Vergleichsbeispiel 1:

Es wird exakt wie im Beispiel 1 vorgegangen mit dem alleinigen Unterschied, daß eine geringere Treibmittelmenge, nämlich nur 35,2 Teile n-Butan bezogen auf 100 Teile Copolymer, eingesetzt wird.

Es werden Schaumpartikel mit einer Schüttdichte von 27 g/l erhalten, die nicht geschrumpft sind und eine glatte Oberfläche besitzen.

Die Gegenüberstellung des Beispiels 1 und des Vergleichsbeispiels 1 zeigt, daß die Vergrößerung der Treibmittelmenge jenseits einer gewissen Grenze keine weitere Expansion der Schaumpartikel mehr bewirkt, sondern daß von da ab geschrumpfte Partikel erhalten werden.

### Vergleichsbeispiel 2:

Die geschrumpften Schaumpartikel, die im Beispiel 1 erhalten werden, werden nach der Gegendruckmethode zu Formteilen verarbeitet. Beim verwendeten Formteil handelt es sich um einen Baustein der Maße 360 x 120 x 150 mm mit 7 bis 20 mm starken Stegen und maximalen Materialdicken von bis zu 80 mm. Durch die mit Düsen bestückten Werkzeugwände wird ein Dampfdruck von 2,5 bis 3,0 bar für 6 bis 8 Sekunden zur innigen Verschweißung der Schaumperlen geleitet. Anschließend wird das Werkzeug und damit das Formteil mit Wasser bis zu ca. 60 bis 80 °C abgekühlt. Dabei wird festgestellt, daß sich die geschrumpften Partikel zu Formteilen mit Dichten von 24 bis 50 g/l verarbeiten lassen.

### Vergleichsbeispiel 3:

Die nicht geschrumpften Schaumpartikel, die im Vergleichsbeispiel 1 erhalten werden, werden genau wie im Vergleichsbeispiel 2 zu Formteilen verarbeitet. Hierbei werden Formteile mit Dichten von 50 bis 75 g/l erhalten.

### Beispiel 2:

Die geschrumpften Schaumpartikel, die im Beispiel 1 erhalten werden, werden vor der weiteren Verarbeitung einer Druckbehandlung unterzogen. Dabei werden die Schaumperlen in einem Drucktank bei einem Druck von 3,5 bar über 20 Stunden bei Raumtemperatur mit Luft imprägniert. Verarbeitet man diese mit einem Innendruck ausgestatteten Schaumperlen genau wie im Vergleichsbeispiel 2, so werden minimale Dichten von 12 g/l erreicht. Durch Erhöhung des Staudruckes in der Werkzeugkammer bzw. durch nachträgliches Reduzieren des Werkzeugvolumens (Tauchkantenverfahren) lassen sich höhere Formteildichten von bis zu 30 g/l einstellen.

### Vergleichsbeispiel 4:

Die nicht geschrumpften Schaumpartikel, die im Vergleichsbeispiel 1 erhalten werden, werden genau wie im Beispiel 2 weiterverarbeitet. Hierbei werden Formteile mit Dichten von 25 bis 55 g/l erhalten.

## Patentansprüche

1. Verfahren zur Herstellung von Formkörpern aus vorgeschäumten Polyolefinteilchen, bei dem man Polyolefinteilchen einsetzt, die auf 30 bis 95 % ihres ursprünglichen Volumens geschrumpft sind und die anschließend eine ausreichende Zeit bei einer mindestens 20 °C unterhalb der Erweichungstemperatur liegenden Temperatur mit einem inerten Gas unter einem Überdruck von 0,2 bis 10 bar behandelt werden, wobei die so behandelten Teilchen unter weitgehender Beibehaltung des Innendrucks in eine Form gefüllt und verschäumt werden.

2. Verfahren gemäß Anspruch 1,
dadurch gekennzeichnet,
daß der Überdruck des inerten Gases 0,5 bis 6 bar beträgt.

3. Verfahren gemäß einem der Ansprüche 1 oder 2,
dadurch gekennzeichnet,
daß als inertes Gas Luft, Stickstoff oder CO₂ verwendet wird.

4. Verfahren gemäß einem der Ansprüche 1 bis 3,
dadurch gekennzeichnet,
daß die geschrumpften Partikel im wesentlichen frei von flüchtigem organischen Treibmittel sind.

5. Verfahren gemäß einem der Ansprüche 1 bis 4,
dadurch gekennzeichnet,
daß die Polyolefinteilchen aus einem Propylen-Ethylen- oder einem Propylen-Buten-1-Randomcopolymeren oder aus einem Random-Terpolymeren von Ethylen, Propylen und Buten-1 bestehen.
